# EUROPEAN PATENT APPLICATION

(11) **EP 3 674 272 A1**
(43) Date of publication of application: **01.07.2020**
(21) Application number: 18849000.7
(22) Date of filing: 28.03.2018
(51) Int. Cl.: C03C 25/40, G02B 6/44

(54) **COATING MATERIAL FOR OPTICAL FIBER, COATED OPTICAL FIBER, AND METHOD FOR PRODUCING COATED OPTICAL FIBER**

(30) Priority: 24.08.2017 JP 2017161399
(71) Applicant: FURUKAWA ELECTRIC CO., LTD., Chiyoda-ku Tokyo 100-8322 (JP)
(72) Inventor: SUYAMA, Kenichi, Tokyo 100-8322 (JP); ARASHITANI, Yoshihiro, Tokyo 100-8322 (JP)
(74) Representative: Leinweber & Zimmermann
(86) International application number: PCT/JP2018/012794
(87) International publication number: WO 2019/038977

(57) **Abstract**

Provided are a coating material for an optical fiber that can improve interface adhesion between a glass optical fiber and a coating layer and can easily coat a glass optical fiber, and a coated optical fiber including the coating material and a manufacturing method thereof. The coating material for an optical fiber includes an ultraviolet curable resin; a silane coupling agent; at least one of a photoacid generator that generates an acid by light irradiation and a thermal acid generator that generates an acid by heat; and a compound including an epoxy group. A coated optical fiber has a glass optical fiber and a coating layer that coats the glass optical fiber, and at least one layer forming the coating layer is formed of the coating material for an optical fiber.

## Description

### Technical Field

The present invention relates to a coating material for an optical fiber, a coated optical fiber including the coating material, and a manufacturing method of the coated optical fiber.

### Background Art

In general, optical fiber is manufactured by coating an outer circumference of a glass optical fiber drawn from a preform (also referred to as an optical fiber base material) with an ultraviolet curable resin and curing the ultraviolet curable resin by ultraviolet irradiation. A coating layer of an optical fiber is intended for preventing breakage of a glass optical fiber that is a waveguide, preventing entry of dirt such as dust or moisture, and preventing transmission loss of light occurring when force applied from the outside of the optical fiber causes a micro deformation (micro bending) of the glass optical fiber. To achieve these purposes, high interface adhesion is required between a glass optical fiber and a coating layer.

Optical fibers are used in various environments including outdoors. It is therefore desirable that interface adhesion between the glass optical fiber and the coating layer be maintained even in a high humidity atmosphere. However, an ultraviolet curable resin suitable for optical fiber coating layers does not strongly adhere to the surface of a glass as it stands. Furthermore, when moisture enters the coating layer, the adhesive between the glass optical fiber and the coating layer is significantly reduced.

To improve interface adhesion between a glass optical fiber and a coating layer, for example, Patent Literatures 1 and 2 disclose a technology in which a silane coupling agent is added to a coating material containing an ultraviolet curable resin. The silane coupling agent reacts or interacts with the surface of the glass optical fiber by a hydrolysis reaction and a dehydration condensation reaction and improves interface adhesion.

### Citation List

### Patent Literature

Patent Literature 1: Japanese Patent Application Laid-Open No. S59-92947
Patent Literature 2: Japanese Patent Application Laid-Open No. 2005-504698
Patent Literature 3: Japanese Patent Application Laid-Open No. 2013-91575
Patent Literature 4: Japanese Patent Application Laid-Open No. 2003-531799

### Summary of Invention

### Technical Problem

It is known that the reaction rates of a hydrolysis reaction and a dehydration condensation reaction of a silane coupling agent generally increase under an acidic or basic environment. Accordingly, to facilitate the reaction of a silane coupling agent and improve interface adhesion, a method of using an acidic or basic resin composition as a coating material has been considered.

However, an acidic resin composition has a significantly high viscosity and may not be applied on the glass optical fiber evenly. Further, a basic resin composition damages a glass optical fiber, and the strength of the glass optical fiber decreases. Furthermore, when a resin composition is acidic or basic, this causes natural progress of a reaction of a silane coupling agent during storage and causes cloudiness of the resin composition. That is, in the method of using an acidic or basic resin composition, since storage stability or performance of the resin composition itself significantly changes and handling of the resin composition is difficult, there is a problem that manufacture of a coated optical fiber is more difficult than before.

The technique disclosed in Patent Literature 3 facilitates a reaction of a silane coupling agent by applying an acidification material on the surface of a glass optical fiber instead of using an acidic resin composition itself. In such a method, however, not only the application process of the acidification material is increased, but also the acidification material is likely to damage a facility, and it is difficult to control an application amount of the acidification material, and thus there still is a problem that the manufacture of a coated optical fiber is more difficult than before.

Further, the technique disclosed in Patent Literature 4 includes a component such as poly(alkoxy)silane in a coating composition together with a catalyst compound that generates protons when exposed to radiation and hydrolyzes the composition.

Even when a photoacid generator such as a catalytic compound as disclosed in Patent Literature 4 facilitates a reaction of a silane coupling agent, however, the generated acid itself does not contribute to interaction of the interface between a glass optical fiber and a coating layer. In the technology disclosed in Patent Literature 4, interface adhesion between the glass optical fiber and the coating layer will depend on the type or the amount of the silane coupling agent included in the coating composition.

The present invention has been made in view of the problems described above and intends to provide a coating material for an optical fiber that can improve interface adhesion between a glass optical fiber and a coating layer and can easily coat a glass optical fiber, and a coated optical fiber including the coating material and a manufacturing method thereof.

### Solution to the Problem

According to a first aspect of the present invention, provided is a coating material for an optical fiber including: an ultraviolet curable resin; a silane coupling agent; at least one of a photoacid generator that generates an acid by light irradiation and a thermal acid generator that generates an acid by heat; and a compound including an epoxy group.

According to a second aspect of the present invention, provided is a coated optical fiber having: a glass optical fiber; and a coating layer that coats the glass optical fiber, and at least one layer forming the coating layer is formed of the coating material for an optical fiber.

According to a third aspect of the present invention, provided is a manufacturing method of a coated optical fiber including steps of: drawing a glass optical fiber; coating the glass optical fiber with a coating material including an ultraviolet curable resin, a silane coupling agent, at least one of a photoacid generator generating an acid by light irradiation and a thermal acid generator generating an acid by heat, and a compound having an epoxy group; curing the ultraviolet curable resin by irradiating the glass optical fiber coated with the coating material with ultraviolet light; and causing at least one of the photoacid generator and the thermal acid generator to generate the acid.

### Advantageous Effects of Invention

According to the present invention, interface adhesion between a glass optical fiber and a coating layer can be improved, and a coating material for an optical fiber can be easily coated.

### Brief Description of Drawings

[FIG. 1] FIG. 1 is a sectional view of a coated optical fiber according to a first embodiment.
[FIG. 2] FIG. 2 is a schematic diagram of a manufacturing apparatus used for a manufacturing method of the coated optical fiber according to the first embodiment.
[FIG. 3] FIG. 3 is a diagram illustrating a flowchart of the manufacturing method of the coated optical fiber according to the first embodiment.
[FIG. 4] FIG. 4 is a schematic diagram of a manufacturing apparatus used for a manufacturing method of a coated optical fiber according to a second embodiment.
[FIG. 5] FIG. 5 is a schematic diagram of the manufacturing apparatus used for the manufacturing method of the coated optical fiber according to the second embodiment.
[FIG. 6] FIG. 6 is a schematic diagram of the manufacturing apparatus used for the manufacturing method of the coated optical fiber according to the second embodiment.
[FIG. 7] FIG. 7 is a diagram illustrating a flowchart of the manufacturing method of the coated optical fiber according to the second embodiment.

### Description of Embodiments

While the embodiments of the present invention will be described below with reference to the drawings, the present invention is not limited to the present embodiments. Note that components having the same function in the drawings described below are labeled with the same reference, and the repeated description thereof may be omitted.

### [First Embodiment]

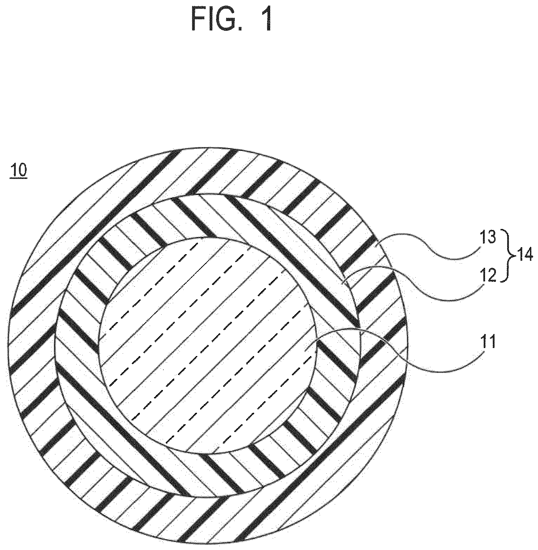

FIG. 1 is a sectional view of a coated optical fiber 10 according to the present embodiment. As illustrated in FIG. 1, the coated optical fiber 10 has a glass optical fiber 11 and a two-layered coating layer 14 including a primary layer 12 (primary coating layer) that is a soft material layer and a secondary layer 13 (secondary coating layer) that is a hard material layer coated on the outer circumference of the glass optical fiber 11.

The primary layer 12 is a flexible soft material layer having a Young's modulus that is larger than or equal to 0.2 MPa and smaller than or equal to 3.0 MPa, preferably having a Young's modulus that is larger than or equal to 0.3 MPa and smaller than or equal to 1.5 MPa. In contrast, the secondary layer 13 is a hard material layer, which is relatively hard, having a Young's modulus that is larger than or equal to 500 MPa and smaller than or equal to 2500 MPa, preferably having a Young's modulus that is larger than or equal to 800 MPa and smaller than or equal to 1800 MPa. Each of the primary layer 12 and the secondary layer 13 is formed of a layer formed by irradiating a coating material for an optical fiber containing an ultraviolet curable resin with ultraviolet light for curing, and has a function of protecting the glass optical fiber 11.

The coated optical fiber 10 is not limited to the configuration illustrated in FIG. 1. For example, the coating layer 14 may be formed of a single layer having a Young's modulus that is larger than or equal to 0.2 MPa and smaller than or equal to 1500 MPa, preferably a Young's modulus that is larger than or equal to 30 MPa and smaller than or equal to 1000 MPa. Further, the coating layer 14 may include three or more layers. Further, the coated optical fiber 10 may take a form of an optical fiber core further including a colored layer coated on the outer circumference of the coating layer 14. Further, the coated optical fiber 10 may take a form of an optical fiber tape core further having a collective coating layer used for bundling a plurality of coated optical fibers 10.

The diameter of the glass optical fiber 11 is typically larger than or equal to 80 µm and smaller than or equal to 150 µm, and generally larger than or equal to 124 µm and smaller than or equal to 126 µm. The thickness of the primary layer 12 is typically greater than or equal to 5 µm and less than or equal to 50 µm. Further, the thickness of the secondary layer 13 is typically thicker than or equal to 5 µm and thinner than or equal to 50 µm. Further, the diameter of the coated optical fiber 10 (that is, the outer diameter of the secondary layer 13) is typically thicker than or equal to 245 µm and thinner than or equal to 255 µm.

The coating material for an optical fiber according to the present embodiment is used as a coating material of the coating layer 14, and at least one of the layers forming the coating layer 14 is formed of the coating material for an optical fiber according to the present embodiment. The coating material for an optical fiber according to the present embodiment is preferably used as a coating material of the primary layer 12 or a coating material of a coating layer in contact with the glass optical fiber 11, such as the coating layer 14 formed of a single layer, for example. The coating material of the coating layer 14 as a coating material for an optical fiber according to the present embodiment will be described in detail below. The term "coating material of the coating layer 14" can mean a coating material of the primary layer 12 when the coating layer 14 includes the primary layer 12 and the secondary layer 13 and can mean a coating material of the coating layer 14 of interest when the coating layer 14 is formed of a single layer.

The coating material of the coating layer 14 contains an ultraviolet curable resin. The ultraviolet curable resin included in the coating material for an optical fiber is not particularly limited as long as it can be polymerized by light. The ultraviolet curable resin may be a resin that can be polymerized by photoradical polymerization or the like, for example. The ultraviolet curable resin may be an ultraviolet curable resin having a polymerizable unsaturated group such as an ethylenic unsaturated group polymerized and cured by an ultraviolet light such as urethane (meth)acrylates such as polyether-based urethane (meth)acrylates and polyester-based urethane (meth)acrylates, epoxy (meth)acrylates, polyester (meth)acrylates, or the like, for example, and it is preferable that the resin have at least two polymerizable unsaturated groups. A polymerizable unsaturated group in the ultraviolet curable resin may be, for example, a group having an unsaturated double bond such as a vinyl group, an allyl group, an acryloyl group, a methacryloyl group, or the like, a group having an unsaturated triple bond such as a propargyl group, or the like. The acryloyl group and the methacryloyl group are preferable out of the groups described above in terms of polymerizability. The ultraviolet curable resin may be a monomer, an oligomer, or a polymer that initiates polymerization by ultraviolet irradiation to be cured and preferably is an oligomer. Note that the oligomer is a polymer having a degree of polymerization of 2 to 100. Further, in the present specification, the term "(meth)acrylates" means one or both of acrylates and methacrylates.

Polyether-based urethane (meth)acrylate is a compound having a polyether segment, (meth)acrylate, and a urethane bond as with a product in a reaction of polyol having a polyether framework with an organic polyisocyanate compound and hydroxyalkyl (meth)acrylate. Further, polyester-based urethane (meth)acrylate is a compound having a polyester segment, (meth)acrylate, and a urethane bond as with a product in a reaction of polyol having a polyester framework with an organic polyisocyanate compound and hydroxyalkyl (meth)acrylate.

Further, the ultraviolet curable resin may include, for example, a diluent monomer, a photosensitizer, a chain transfer agent, and various additives in addition to an oligomer and a photopolymerization initiator. As a diluent monomer, monofunctional (meth)acrylate, or polyfunctional (meth)acrylate is used. The diluent monomer here means a monomer used for diluting an ultraviolet curable resin.

Monofunctional (meth)acrylate or polyfunctional (meth)acrylate as a diluent monomer may be the followings. For example, di(meth)acrylate such as butanediol di(meth)acrylate, hexanediol di(meth)acrylate, ethoxylated hexanediol di(meth)acrylate, propoxylated hexanediol di(meth)acrylate, diethyleneglycol di(meth)acrylate, polyethyleneglycol di(meth)acrylate, polypropyleneglycol di(meth)acrylate, neopentylglycol di(meth)acrylate, ethoxylated neopentylglycol di(meth)acrylate, hydroxypivalic acid neopentylglycol di(meth)acrylate, or the like; mono(meth)acrylate such as 2-hydroxyethyl (meth)acrylate, 2-hydroxypropyl(meth)acrylate, 2-hydroxybutyl (meth)acrylate, n-butyl (meth)acrylate, isobutyl (meth)acrylate, t-butyl (meth)acrylate, glycidyl (meth)acrylate, acryloyl morpholine, N-vinyl pyrrolidone, tetrahydrofurfuryl acrylate, cyclohexyl (meth)acrylate, 2-ethylhexyl (meth)acrylate, isobornyl (meth)acrylate, isodecyl (meth)acrylate, lauryl (meth)acrylate, tridecyl (meth)acrylate, cetyl (meth)acrylate, stearyl (meth)acrylate, benzyl (meth)acrylate, 2-ethoxyethyl (meth)acrylate, 3-methoxybutyl (meth)acrylate, ethylcarbitol (meth)acrylate, phosphoric acid (meth)acrylate, ethylene oxide modified phosphoric acid (meth)acrylate, phenoxy (meth)acrylate, ethylene oxide modified phenoxy (meth)acrylate, propylene oxide modified phenoxy (meth)acrylate, nonylphenol (meth)acrylate, ethylene oxide modified nonylphenol (meth)acrylate, propylene oxide modified nonylphenol (meth)acrylate, methoxy diethyleneglycol (meth)acrylate, methoxypolyethylene glycol (meth)acrylate, methoxypropylene glycol (meth)acrylate, 2-(meth)acryloyloxyethyl-2-hydroxypropyl phthalate, 2-hydroxy-3-phenoxypropyl (meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, 2-(meth)acryloyloxypropyl tetrahydrohydrogen phthalate, dimethylaminoethyl (meth)acrylate, trifluoroethyl (meth)acrylate, tetrafluoropropyl (meth)acrylate, hexafluoropropyl (meth)acrylate, octafluoropropyl (meth)acrylate, octafluoropropyl (meth)acrylate, adamantyl mono (meth)acrylate, or the like; tri(meth)acrylate such as trimethylolpropane tri(meth)acrylate, ethoxylated trimethylolpropane tri(meth)acrylate, propoxylated trimethylolpropane tri(meth)acrylate, tris 2-hydroxyethyl isocyanurate tri(meth)acrylate, glycerin tri(meth)acrylate , pentaerythritol tri(meth)acrylate, dipentaerythritol tri(meth)acrylate, ditrimethylolpropane tri(meth)acrylate, or the like; tetrafunctional or higher polyfunctional (meth)acrylate such as pentaerythritol tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, dipentaerythritol hexa(meth)acrylate, ditrimethylolpropane hexa(meth)acrylate, or the like; or polyfunctional (meth)acrylate in which a part of the (meth)acrylate is substituted with an alkyl group or ε-caprolactone, or the like may be used.

One type of the diluent monomers described above may be used, or two or more types of the diluent monomers may be used in combination. In consideration of the abrasion resistance of the coating layer 14 that is a coating film to be obtained, the addition amount of the diluent monomer is preferably less than or equal to 100 parts by mass, more preferably 10 to 70 parts by mass with respect to an oligomer of 100 parts by mass.

Further, the coating material of the coating layer 14 contains a silane coupling agent that interacts with the surface of the glass optical fiber 11 by hydrolysis and dehydration condensation and an acid generator that generates an acid such as a Lewis acid, a Brønsted acid, or the like by the application of energy. The acid generated from an acid generator facilitates hydrolysis and dehydration condensation of a silane coupling agent, and adhesion between the resin included in the coating layer 14 and the glass optical fiber 11 is improved.

An acid generator that generates an acid by application of energy is, specifically, a photoacid generator that generates an acid by light irradiation or a thermal acid generator that generates an acid by heat. The coating material of the coating layer 14 contains at least one of a photoacid generator and a thermal acid generator. The coating material of the coating layer 14 may contain both of a photoacid generator and a thermal acid generator. The photoacid generator and the thermal acid generator included in the coating material of the coating layer 14 will be described below in the order.

### [Photoacid Generator]

A photoacid generator generates an acid by absorbing an irradiation light (generally, an ultraviolet light), subsequently being decomposed, and removing hydrogen from a solvent or the photoacid generator itself. The light absorbed by the photoacid generator is different in accordance with the type of photoacid generator and is an ultraviolet light in a wavelength region that is approximately longer than or equal to 10 nm and shorter than or equal to 405 nm, for example. It is preferable that the wavelength region of the light used for curing the ultraviolet curable resin included in the coating material of the coating layer 14 and the wavelength region of the light used for causing the photoacid generator to generate an acid at least partially overlap each other. Thereby, the curing of the ultraviolet curable resin and the generation of an acid by the photoacid generator can be simultaneously performed by using a light from a single light source.

The photoacid generator that can be used as the coating material of the coating layer 14 is not particularly limited as long as the agent generates an acid by light irradiation. Photoacid generators can be roughly classified into onium salt-based photoacid generators and nonionic photoacid generators. In the present embodiment, while at least one of the onium salt-based photoacid generator and the nonionic photoacid generator is used, other types of photoacid generators may be used.

An onium salt-based photoacid generator that can be used as the coating material of the coating layer 14 may be, but not particularly limited to, an organic sulfonium salt compound, an organic iodonium salt compound, an organic oxonium salt compound, an organic ammonium salt compound, or an organic phosphonium salt compound, which has a counter anion such as a hexafluoroantimonate anion, a tetrafluoroborate anion, a hexafluorophosphate anion, a hexachloroantimonate anion, a trifluoromethanesulfonate ion, a fluorosulfonate ion, or the like, for example. Specifically, the counter anion is, for example, B(C₆F₅)₄⁻, SbF₆⁻, SbF₄⁻, AsF₆⁻, PF₆⁻, BF₄⁻, CF₃SO₃⁻, or the like. One type of the above may be used, or two or more types of the above may be mixed and used.

A commercially available onium salt-based photoacid generator may be, for example, IRGACURE (registered trademark, hereafter, omitted) 250, IRGACURE 270, IRGACURE PAG 290, GSID 26-1 (so far, manufactured by BASF, product name), WPI-113, WPI-116, WPI-116, WPI-169, WPI-170, WPI-124 , WPAG-336, WPAG-367, WPAG-370, WPAG-469, WPAG-638 (so far, manufactured by Wako Pure Chemical Industries, Ltd., product name), B2380, B2381, C1390, D2238, D2248, D2253, 10591, N1066, T1608, T1609, T2041, T2042 (so far, manufactured by Tokyo Chemical Industry Co., Ltd., product name), CPI-100, CPI-100P, CPI-101A, CPI-200K, CPI-210S, IK-1, IK-2, CPI-310B, CPI-410S (so far, manufactured by San-Apro Ltd., product name), SP-056, SP-066, SP-130, SP-140, SP-150, SP-170, SP-171, SP-172 (so far, manufactured by ADEKA Corporation, product name), CD-1010, CD-1011, CD-1012 (so far, manufactured by Sartmar, product name), PI2074 (manufactured by Rhodia Japan Ltd., product name), or the like.

A nonionic photoacid generator that can be used as the coating material of the coating layer 14 may be, but not particularly limited to, a phenacyl sulfone type photoacid generator, an o-nitrobenzyl ester type photoacid generator, an iminosulfonate type photoacid generator, a sulfonic acid ester type photoacid generator of N-hydroxyimide, or the like, for example. One type of the above may be used, or two or more types of the above may be mixed and used. A specific compound of the nonionic photoacid generator may be, for example, sulfonyl diazomethane, oxime sulfonate, imidosulfonate, 2-nitrobenzylsulfonate, disulfone, pyrogallolsulfonate, p-nitrobenzyl-9,10-dimethoxyanthracene-2-sulfonate, N-sulfonylphenylsulfonamide, trifluoromethanesulfonic acid-1, 8-naphthalimide, nonafluorobutanesulfonic acid-1,8-naphthalimide, perfluorooctanesulfonic acid-1,8-naphthalimide, pentafluorobenzenesulfonic acid-1,8-naphthalimide, nonafluorobutanesulfonic acid-1,3,6-trioxo-3,6-dihydro-1H-11-thia-azacyclopentaanthracene-2-yl ester, nonafluorobutanesulfonic acid-8-isopropyl-1,3,6-trioxo-3,6-dihydro-1H-11-thia-2-azacyclopentaanthracene-2-yl ester, 1,2-naphthoquinone-2-diazide-5-sulfonic acid chloride, 1,2-naphthoquinone-2-diazide-4-sulfonic acid chloride, 1,2-benzoquinone-2-diazide-4-sulfonic acid chloride, 1,2-naphthoquinone-2-diazide-5-sodium sulfonate, 1,2-naphthoquinone-2-diazide-4-sodium sulfonate, 1,2-benzoquinone-2-diazide-4-sodium sulfonate, 1,2-naphthoquinone-2-diazide-5-potassium sulfonate, 1,2-naphthoquinone-2-diazide-4-potassium sulfonate, 1,2-benzoquinone-2-diazide-4-potassium sulfonate, 1,2-naphthoquinone-2-diazide-5-methyl sulfonate, 1,2-benzoquinone-2-diazido-4-methyl sulfonate, or the like.

A commercially available nonionic photoacid generator may be, for example, WPAG-145, WPAG-149, WPAG-170, WPAG-199 (so far, manufactured by Wako Pure Chemical Industries, Ltd., product name), D2963, F0362, M1209, M1245 (so far, manufactured by Tokyo Kasei Kogyo Co., Ltd., product name), SP-082, SP-103, SP-601, SP-606 (so far, manufactured by ADEKA Corporation, product name), SIN-11 (manufactured by San-Apro Ltd., product name), NT-1TF (manufactured by San-Apro stock Company-made, product name) or the like.

### [Thermal Acid Generator]

A thermal acid generator is used as a thermal latent cationic initiator for thermal curing of an epoxy resin or the like and is decomposed to generate an acid when heated at a temperature higher than or equal to a predetermined temperature. The acid generation temperature (decomposition temperature) of a thermal acid generator used in the present embodiment, which is different in accordance with the type of thermal acid generator, is preferably higher than or equal to 60 degrees Celsius and lower than or equal to 200 degrees Celsius, particularly preferably higher than or equal to 80 degrees Celsius and lower than or equal to 150 degrees Celsius in order to reduce influence on the coating optical fiber 10.

The thermal acid generator that can be used as the coating material of the coating layer 14 is not particularly limited as long as the agent generates an acid by thermal decomposition. For example, an onium salt thermal acid generator such as an organic onium salt-based compound in which a cationic component and an anionic component are paired is used as a thermal acid generator. A cationic component of the thermal acid generator may be, for example, an organic sulfonium salt compound, an organic oxonium salt compound, an organic ammonium salt compound, an organic phosphonium salt compound, an organic iodonium salt compound, or the like. Further, an anionic component of the thermal acid generator may be, for example, B(C₆F₅)₄⁻, SbF₆⁻, SbF₄⁻, AsF₆⁻, PF₆⁻, BF₄⁻, CF₃SO₃⁻, or the like. Further, for example, an organometallic complex such as an aluminum chelate complex, an iron-allene complex, a titanocene complex, an allylsilanol-aluminum complex, or the like, an oxime sulfonate-based acid generator, diazomethane-based acid generator such as bis(alkyl) or bis(arylsulfonyl)diazomethanes, poly(bis(sulfonyl))diazomethanes, or the like, a nitrobenzyl sulfonate-based acid generator, an iminosulfonate-based acid generator, a disulfone-based acid generator, or the like functions as a thermal acid generator. One type of the above may be used, or two or more types of the above may be mixed and used.

A commercially available thermal acid generator may be, for example, K-PURE (registered trademark, hereinafter, omitted) CXC-1612, K-PURE CXC-1613, K-PURE CXC-1614, K-PURE CXC-1738, K-PURE CXC-2700, K-PURE TAG-2689, K -PURE TAG-2681, K-PURE TAG-2685, K-PURE TAG-2690, K-PURE TAG-2712, K-PURE TAG-2713 (so far, manufactured by KING INDUSTRIES, product name), San-Aid SI-45L, San-Aid SI-60L, San-Aid SI-80L, San-Aid SI-100L, San-Aid SI-110L, San-Aid SI-150L, San-Aid SI-300, San-Aid SI-360, San-Aid SI-B2A, San-Aid SI-B3A, San-Aid SI-B3, San-Aid SI-B4, San-Aid SI-B5, San-Aid SI-B7 (so far, manufactured by Sanshin Chemical Industry Co., Ltd., product name), or the like.

Each addition amount of the photoacid generator and the thermal acid generator, which is an acid generator that generates an acid by application of energy described above, can be set as described below.

The addition amount of the photoacid generator is preferably larger than or equal to 0.01 wt%, more preferably larger than or equal to 0.1 wt% with respect to the coating material of the coating layer 14. When the photoacid generator is less than the preferable amount, the progression rate of a hydrolysis reaction and a dehydration condensation reaction of the silane coupling agent decreases due to a reduction in the amount of acid generated from the photoacid generator, and development of adhesiveness between the coating layer 14 and the glass optical fiber 11 takes time. Note that "wt%" indicates a concentration in percent by weight (the same applies below).

Further, the addition amount of the photoacid generator is preferably smaller than or equal to the addition amount of the photopolymerization initiator described below included in the coating material of the coating layer 14, more preferably smaller than the addition amount of the photopolymerization initiator. When the photoacid generator is added more than the photopolymerization initiator, since the reaction of the photopolymerization initiator, which also absorbs ultraviolet light and generates radical species, is inhibited, curability of the coating layer 14 may decrease, and the elastic modulus may decrease. Specifically, the addition amount of the photoacid generator is preferably smaller than or equal to 10 wt%, more preferably smaller than or equal to 5 wt% with respect to the coating material of the coating layer 14. By adding a photoacid generator at such an addition amount, it is possible to cause the photopolymerization initiator to react sufficiently, and it is possible to obtain sufficient curability for the primary layer 12. Note that sufficient curability of the primary layer 12 corresponds to a state where the primary layer 12 has the Young's modulus that is larger than or equal to 0.2 MPa and smaller than or equal to 3.0 MPa, preferably larger than or equal to 0.3 MPa and smaller than or equal to 1.5 MPa after curing so that the coated optical fiber 10 maintains the characteristics and the function.

The addition amount of the thermal acid generator is preferably larger than or equal to 0.01 wt% and smaller than or equal to 10 wt%, more preferably larger than or equal to 0.1 wt% and smaller than or equal to 5 wt% with respect to the coating material of the coating layer 14. With a smaller amount than such a preferable range, facilitating effect for hydrolysis and polycondensation reaction of the silane coupling agent decreases due to a reduction in the amount of the generated acid, and development of adhesiveness between the coating layer 14 (primary layer 12) and the glass optical fiber 11 takes time. With a larger amount than such a preferable range, storage stability of the coating material may decrease.

The photoacid generator and the thermal acid generator described above may be used in combination with each other. The excessive addition of a photoacid generator may inhibit a reaction of a photopolymerization initiator described below, which similarly absorbs ultraviolet light and generates radical species. Accordingly, by using a photoacid generator and a thermal acid generator in combination, it is possible to compensate the effect of a photoacid generator while suppressing inhibition of a reaction of a photopolymerization initiator.

Note that, the addition amount of the acid generator in the coating material of the coating layer 14 is preferably smaller than or equal to the amount of photopolymerization initiator, more preferably smaller than the addition amount of the photopolymerization initiator. Note that an addition amount of an acid generator here means an addition amount of a photoacid generator when the photoacid generator out of the photoacid generator and the thermal acid generator is added alone, and an addition amount of a thermal acid generator when the thermal acid generator out of the photoacid generator and the thermal acid generator is added alone. Furthermore, an addition amount of an acid generator here means the total addition amount of a photoacid generator and a thermal acid generator when the photoacid generator and the thermal acid generator are used in combination. An addition amount of a photoacid generator when added alone is defined as described above. With respect to the addition amount of a thermal acid generators when added alone, an acid may occur during storage, which may facilitate a polycondensation reaction of a silane coupling agent and reduce long term storage stability of a coating material. Further, when a photoacid generator and a thermal acid generator are used in combination, it is preferable that the total addition amount of the photoacid generator and the thermal acid generator be smaller than or equal to the addition amount of a photopolymerization initiator so as to reduce influence of the photoacid generator and the thermal acid generator on the photopolymerization initiator.

In the present embodiment, since at least one of a photoacid generator and a thermal acid generator is added to the coating material of the coating layer 14, the reaction of a silane coupling agent can be facilitated by adding at least one of light and heat during manufacture of the optical fiber. Furthermore, the generated acid enables the reaction of the epoxy group of an epoxy compound to proceed. Since substantially no acid is generated from the photoacid generator and the thermal acid generator without addition of light and heat, it is easy to handle the coating material.

A thermal acid generator can generate an acid due to heat from the light source during curing of an ultraviolet curable resin or reaction heat of the resin itself without requiring an additional special step. Further, a heating step to generate an acid from a thermal acid generator may be set separately. In such a case, as with heat aging described below, a device used for heating an optical fiber core after an ultraviolet curable resin is cured may be installed in the post-stage of an ultraviolet irradiation apparatus, or the manufactured optical fiber core may be set inside a thermostatic incubator to perform heat aging. It is therefore possible to accelerate improvement of adhesiveness between the coating layer 14 and the glass optical fiber 11.

In terms of reducing influence of heating on the ultraviolet curable resin, the acid generation temperature (decomposition temperature) of a thermal acid generator is preferably from 60 to 200 degrees Celsius and particularly preferably from 80 to 150 degrees Celsius as described above.

Note that, even when a photoacid generator and a thermal acid generator are used in combination, each of the photoacid generator and the thermal acid generator can be added at the addition amount in the range described above. However, excessive addition of a thermal acid generator may facilitate single polymerization of a silane coupling agent due to the generated acid and cause impairment of storage stability of an ultraviolet-cured resin. Therefore, when a photoacid generator and a thermal acid generator are used in combination, the addition amount of the thermal acid generator is preferably smaller than or equal to 10 wt% with respect to the coating material of the coating layer 14 and more preferably less than the addition amount of the photoacid generator.

### [Epoxy Compound]

Further, the coating material of the coating layer 14 contains an epoxy compound that is a compound having an epoxy group that performs an acid catalytic reaction. In an epoxy compound, a ring cleavage reaction of an epoxy group occurs in which an acid generated from a photoacid generator or a thermal acid generator serves as a catalyst, and a hydroxyl group is generated. The hydroxyl group generated by the ring cleavage reaction of the epoxy group forms a covalent bond or a hydrogen bond with a hydroxyl group on the surface of the glass optical fiber 11 to interact with the surface of the glass optical fiber 11, for example. As a result, adhesion between the resin contained in the coating layer 14 (primary layer 12) and the glass optical fiber 11 is improved.

It is preferable that an epoxy compound be a compound having a chemical structure or a functional group that reacts or interacts with an ultraviolet curable resin separately from the epoxy group that reacts by an acid catalyst. For example, it is preferable that an epoxy compound be a compound that is incorporated into an ultraviolet curable resin by a radical polymerization reaction or an ene-thiol reaction.

Further, it is preferable that an epoxy compound be a compound that has a photopolymerizable functional group and is radically polymerized by radicals generated from the photopolymerization initiator by ultraviolet light irradiation. A photopolymerizable functional group may be, for example, an acryloyl group, a methacryloyl group, a maleimide group, a styryl group, a maleic anhydride residue, a vinyl ether group, an allyl ether group, an alkenyl group having 2 to 10 carbon atoms, an alkynyl group having 2 to 10 carbon atoms, or the like, and a (meth)acryloyl group is preferable. Note that, in the present specification, "(meth)acryloyl group" means one or both of an acryloyl group and an methacryloyl group.

By having a photopolymerizable functional group, an epoxy compound is incorporated into polymer chains in a reaction with oligomers of the ultraviolet curable resin by radical polymerization. Thereby, the reaction between the epoxy groups of the epoxy compounds due to an acid generated from a photoacid generator is inhibited, for example, by a steric hindrance or the like, and as a result, interaction between a hydroxyl group derived from an epoxy group and the surface of the glass optical fiber 11 preferentially occurs.

An epoxy compound may be preferably, but not particularly limited to, a compound with an epoxy group and a photopolymerizable functional group, for example, glycidyl (meth)acrylate, methyl glycidyl (meth)acrylate, 4-hydroxybutyl (meth)acrylate glycidy ether, 3,4-epoxybutyl (meth)acrylate, 3-methyl-3,4-epoxybutyl (meth)acrylate , 3-ethyl-3,4-epoxybutyl (meth)acrylate, 4-methyl-4,5-epoxypentyl (meth)acrylate, 5-methyl-5,6-epoxyhexyl(meth)acrylate, α-ethyl acrylic acid glycidyl, allyl glycidyl ether, crotonyl glycidyl ale, (iso)crotonic acid glycidyl ether, (3,4-epoxycyclohexyl)methyl (meth)acrylate, N-(3,5-dimethyl-4-glycidyl)benzyl acrylamide, o-vinyl benzyl glycidyl ether, m-vinyl benzyl glycidyl ether, p-vinyl benzyl glycidyl ether, α-methyl-o-vinyl benzyl glycidyl ether, α-methyl-m-vinyl benzyl glycidyl ether, α-methyl-p-vinyl benzyl glycidyl ether, 2,3-diglycidyl oxymethyl styrene, 2,4-diglycidyl oxymethyl styrene, 2,5-diglycidyl oxymethyl styrene, 2,6-diglycidyl oxymethyl styrene, 2,3,4-triglycidyloxymethylstyrene, 2,3,5-triglycidyl oxymethyl styrene, 2,3,6- triglycidyl oxymethyl styrene, 3,4,5-triglycidyl oxymethyl styrene, 2,4,6-triglycidyl oxymethyl styrene, or the like.

Further, as an epoxy compound, not only a monomer but also a polymer or an oligomer may be used as long as it does not impair the compatibility. Such a polymer or an oligomer may be, for example, copolymers of monomers of epoxy group compounds and various vinyl monomers each having a photopolymerizable functional group, and specifically may be, for example, Marproof G-0115S, Marproof G-0130S, Marproof G-0250S, Marproof G-0150M, Marproof G-1005S, Marproof G01010S, Marproof G-1005SA, Marproof G-01100 (so far, manufactured by NOF Corporation, product name), ARUFON UG-4010, ARUFON UG-4035, ARUFON UG-4040, ARUFON UG-4070 (so far, manufactured by Toagosei Co., Ltd. product name), Epofriend AT501, Epofriend CT310 (so far, manufactured by Daicel Corporation. product name), or the like as a commercially available copolymer.

The addition amount of the epoxy compound is preferably an amount such that the concentration of an epoxy group is larger than or equal to 0. 1 mmol/g and smaller than or equal to 5.0 mmol/g, more preferably an amount such that the concentration of an epoxy group is larger than or equal to 0. 2 mmol/g and smaller than or equal to 2.5 mmol/g with respect to the coating material of the coating layer 14. When the addition amount of the epoxy compound is smaller than this preferable range, adhesiveness between the coating layer 14 and the glass optical fiber 11 decreases due to the reduced reaction amount of an acid catalysis of an epoxy group or development of adhesiveness takes time. When the addition amount of the epoxy compound is larger than this preferable range, there is a concern about the reaction between the epoxy groups, and reactivity of the ultraviolet curable resin may decrease, or polymerizability may not be obtained as designed. Note that, in the present specification, the term "concentration of an epoxy group" means a value obtained by dividing the value of milli moles (mmol) of an epoxy group of an epoxy compound by the value of grams (g) of a coating material resin composition.

The addition amount of the epoxy compound may be determined such that the concentration of an epoxy group is in the range described above with respect to the coating material of the coating layer 14. Specifically, the addition amount of the epoxy compound is preferably larger than or equal to 0. 5 wt% and smaller than or equal to 80 wt%, more preferably larger than or equal to 1.0 wt% and smaller than or equal to 20 wt% with respect to 100 wt% of the coating material of the coating layer 14. The addition amount of the epoxy compound can be adjusted in accordance with the physical property of the target coating layer 14. When the addition amount of the epoxy compound is smaller than such a preferable range, since the amount of the hydroxyl groups generated by a ring cleavage reaction of the epoxy group is reduced, development of adhesiveness between the coating layer 14 and the glass optical fiber 11 takes time. When the addition amount of the epoxy compound is larger than this preferable range, there is a concern about a reaction between the epoxy groups.

### [Silane Coupling Agent]

As a silane coupling agent, any agent including agents generally known and commonly used may be used as long as it does not impair the effects of the present invention. The addition amount of the silane coupling agent is approximately determined in accordance with experiments or the like. A specific compound as a silane coupling agent may be, but not particularly limited to, tetramethyl silicate, tetraethyl silicate, vinyl trichloro silane, vinyl trimethoxy silane, vinyl triethoxy silane, 2-(3,4-epoxycyclohexyl) ethyl trimethoxy silane, 3-glycidoxy propyl methyl dimethoxy silane, 3-glycidoxy propyl trimethoxy silane, 3-glycidoxy propyl methyl diethoxy silane, 3-glycidoxy propyl triethoxy silane, p-styryl trimethoxy silane, 3-methacryloxy propyl methyl dimethoxy silane, 3-methacryloxy propyl trimethoxy silane, 3-methacryloxy propyl methyl diethoxy silane, 3-methacryloxy propyl triethoxy silane, 3-acryloxy propyl trimethoxy silane, N-2-(aminoethyl)-3-aminopropyl methyl dimethoxy silane, N-2-(aminoethyl)-3-aminopropyl trimethoxy silane, 3-aminopropyl trimethoxy silane, 3-aminopropyl triolethoxy silane, 3-triethoxy silyl-N-(1,3-dimethyl-butylidene)propylamine, N-phenyl-3-aminopropyl trimethoxy silane, tris-(trimethoxy silyl propyl)isocyanurate, 3-ureidopropyl trialkoxy silane, 3-mercaptopropyl methyl dimethoxy silane, 3-mercaptopropyl trimethoxy silane, 3-isocyanatonate propyl triethoxy silane, or the like, for example.

The addition amount of the silane coupling agent is preferably larger than or equal to 0. 1 wt% and smaller than or equal to 10 wt%, more preferably larger than or equal to 0.5 wt% and smaller than or equal to 5.0 wt% with respect to the coating layer 14. When the silane coupling agent is in the range described above, sufficient adhesion between the glass optical fiber 11 and the coating layer 14 is obtained, and good storage stability of the coating material is obtained.

Further, the coating material of the coating layer 14 may contain a diluent monomer, a photopolymerization initiator, a photosensitizer, a chain transfer agent, and various additives. As a diluent monomer, monofunctional (meth)acrylate or polyfunctional (meth)acrylate is used. The diluent monomer is a monomer used for diluting the ultraviolet curable resin.

### [Photopolymerization Initiator]

A photopolymerization initiator initiates polymerization of an ultraviolet curable resin by absorbing a light in the wavelength region emitted from an ultraviolet irradiation apparatus and generating radicals. The type of photopolymerization initiator is not particularly limited and may be suitably selected. As a photopolymerization initiator, for example, but not particularly limited to, benzyl ketal-based photopolymerization initiator, α-hydroxyketone-based photopolymerization initiator, α-aminoketone-based photopolymerization initiator, acylphosphine oxide-based photopolymerization initiator, oxime ester-based photopolymerization initiator, acridine-based photopolymerization initiator, benzophenone-based photopolymerization initiator, acetophenone-based photopolymerization initiator, aromatic ketoester-based photopolymerization initiator, benzoic ester-based photopolymerization initiator, or the like may be used.

A benzylketal-based photopolymerization initiator may be 2,2-dimethoxy-1,2-diphenylethane-1-one, for example.

An α-hydroxyketone-based photopolymerization initiator may be 1-(4-isopropylphenyl)-2-hydroxy-2-methylpropan-1-one, 2-hydroxy-2-methyl-1-phenylpropane-1-one, 1-hydroxycyclohexyl phenylketone, 1-[4-(2-hydroxyethoxy)phenyl]-2-hydroxy-2-methylpropane-1-one, 2-hydroxy-1-[4-[4-(2-hydroxy-2-methylpropionyl)benzyl]phenyl]-2-methylpropane-1-one, for example.

A α-aminoketone-based photopolymerization initiator may be, for example, 2-dimethylamino-2-methyl-1-phenylpropane-1-one, 2-diethylamino-2-methyl-1-phenylpropane-1-one, 2-methyl-2-morpholino-1-phenylpropane-1-one, 2-dimethylamino-2-methyl-1-(4-methylphenyl)propane-1-one, 2-dimethylamino-1-(4-ethylphenyl)-2-methylpropane-1-one, 2-dimethylamino-1-(4-isopropylphenyl)-2-methylpropane-1-one, 1-(4-butylphenyl)-2-dimethylamino-2-methylpropane-1-one, 2-dimethylamino-1-(4-methoxyphenyl)-2-methylpropane-1-one, 2-dimethylamino-2-methyl-1-(4-methylthiophenyl)propane-1-one, 2-methyl-1-(4-methylthiophenyl)-2-morpholinopropane-1-one, 2-benzyl-2-dimethylamino-1-(4-morpholinophenyl)-butane-1-one, 2-benzyl-2-dimethylamino-1-(4-dimethylaminophenyl)-butane-1-one, 2-dimethylamino-2-[(4-methylphenyl)methyl]-1-[4-(4-morpholinyl)phenyl]-1-butanone.

An acylphosphine oxide-based photopolymerization initiator may be, for example, 2,4,6-trimethylbenzoyl-diphenylphosphine oxide, bis(2,4,6-trimethylbenzoyl)-phenylphosphine oxide, bis(2,6-dimethoxybenzoyl)-(2,4,4-trimethylpentyl)phosphine oxide.

An oxime ester-based photopolymerization initiator may be, for example, 1-phenylpropane-1,2-dione-2-(O-ethoxycarbonyl)oxime, 1-phenylbutane-1,2-dione-2-(O-methoxycarbonyl)oxime, 1,3-diphenylpropane-1,2,3-trione-2-(O-ethoxycarbonyl)oxime, 1-[4-(phenylthio)phenyl]octane-1,2-dione-2-(O-benzoyl)oxime, 1-[4-[4-(carboxyphenyl)thio]phenyl]propane-1,2-dione-2-(O-acetyl)oxime, 1-[9-ethyl-6-(2-methylbenzoyl)-9H-carbazol-3-yl]ethanone-1-(O-acetyl)oxime, 1-[9-ethyl-6-[2-methyl-4-[1-(2,2-dimethyl-1,3-dioxolane-4-yl)methyloxy]benzoyl]-9H-carbazol-3-yl] ethanone-1-(O-acetyl)oxime.

An acridine-based photopolymerization initiator may be 1,7-bis(acridin-9-yl)-n-heptane, for example.

A benzophenone-based photopolymerization initiator may be, for example, benzophenone, 4,4'-bis (dimethylamino)benzophenone, 4,4'-bis(diethylamino)benzophenone, 4-phenylbenzophenone, 4,4'-dichlorobenzophenone, 4-hydroxybenzophenone, alkylated benzophenone, 3,3',4,4'-tetrakis(t-butylperoxycarbonyl)benzophenone, 4-methylbenzophenone, dibenzylketone, fluorenone.

An acetophenone-based photopolymerization initiator may be, for example, 2,2-diethoxy acetophenone, 2,3-diethoxy acetophenone, 4-t-butyldichloro acetophenone, benzal acetophenone, 4-azidobenzal acetophenone.

An aromatic ketoester-based photopolymerization initiator may be methyl 2-phenyl-2-oxyacetate, for example.

A benzoic ester-based photopolymerization initiator may be, for example, ethyl (4-dimethylamino)benzoate, (2-ethyl)hexyl 4-(dimethylamino)benzoate, ethyl (4-diethylamino)benzoate, methyl (2-benzoyl)benzoate.

A commercially available photopolymerization initiator may be IRGACURE (registered trademark, hereinafter, omitted) 651, IRGACURE 184, IRGACURE 1173, IRGACURE 2959, IRGACURE 127, IRGACURE 907, IRGACURE 369, IRGACURE 379, IRGACURE TPO, IRGACURE 819, IRGACURE OXE01, IRGACURE OXE02, IRGACURE MBF, IRGACURE 754 (so far, manufactured by BASF Corp., product name), Adeka Akruz (registered trademark) NCI-831 (manufactured by ADEKA, product name), or the like.

The addition amount of the photopolymerization initiator, which may be appropriately determined in accordance with experiments or the like, is preferably larger than or equal to 0. 01 wt% and smaller than or equal to 10 wt%, more preferably larger than or equal to 0.1 wt% and smaller than or equal to 8 wt% with respect to the coating material of the coating layer 14. When the addition amount of the photopolymerization initiator is excessively small, since the reaction rate of radical polymerization, that is, the curing rate of the generated resin composition becomes slow, the curing is likely to take time, or the curing characteristics are likely to decrease. In contrast, when the addition amount of the photopolymerization initiator is excessively large, an excessive amount of the photopolymerization initiator may reduce curability in the depth of a resin layer.

### [Photosensitizer]

A photosensitizer is added to the coating material of the coating layer 14 for the purpose of improving photosensitivity of a photoacid generator. It is preferable that a photosensitizer be a substance that absorbs light in a wavelength region different from that of the photoacid generator. A photosensitizer improves photosensitivity of the photoacid generator by absorbing light in the wavelength region in which the photoacid generator cannot absorb the light. Therefore, the absorption wavelength region of a photosensitizer and the absorption wavelength region of a photoacid generator are different from each other, and it is more preferable that there be less overlap therebetween.

The addition amount of the photosensitizer is preferably larger than or equal to 0. 1 wt% and smaller than or equal to 10 wt%, more preferably larger than or equal to 0.5 wt% and smaller than or equal to 10 wt% with respect to the coating material of the coating layer 14. When the addition amount of the photosensitizer is larger than or equal to 0.1 wt%, a desired sensitivity is easily obtained, and when the addition amount of the photosensitizer is smaller than or equal to 10 wt%, transparency of a coating film is easily ensured.

A photosensitizer that can be used for a coating material of the coating layer 14 may be, but not particularly limited to, anthracene derivative, benzophenone derivative, thioxanthone derivative, anthraquinone derivative, benzoin derivative, or the like, for example.

A specific compound of photosensitizers may be, but not particularly limited to, 9,10-dialkoxy anthracene, 2-alkyl thioxanthone, 2,4-dialkyl thioxanthone, 2-alkyl anthraquinone, 2,4-dialkyl anthraquinone, p,p'-diamino benzophenone, 2-hydroxy-4-alkoxy benzophenone, benzoin ether, anthrone, anthracene, 9,10-diphenyl anthracene, 9-ethoxy anthracene, pyrene, perylene, coronene, phenanthrene, benzophenone, benzyl, benzoin, methyl (2-benzoyl)benzoate, butyl (2-benzoyl)benzoate, benzoin ethylether, benzoin-i-butylether, 9-fluorenone, acetophenone, p,p'-tetramethyl diamino benzophenone, p,p'-tetraethyl amino benzophenone, 2-chloro thioxanthone, 2-isopropyl thioxanthone, 2,4-diethyl thioxanthone, phenothiazine, acridine orange, benzoflavin, cetoflavin-T, 2-nitrofluorene, 5-nitroacenaphthene, benzoquinone, 2-chloro-4-nitroaniline, N-acetyl-p-nitroaniline, p-nitroaniline, N-acetyl-4-nitro-1-naphthylamine, picramide, anthraquinone, 2-ethyl anthraquinone, 2-tert-butyl anthraquinone, 1,2-benz anthraquinone, 3-methyl-1,3-diaza-1,9-benzanthrone, dibenzalacetone, 1,2-naphthoquinone, 3,3'-carbonyl-bis(5,7-dimethoxy carbonyl coumarin), 9,10-di butoxy anthracene, 9,10-dipropoxy anthracene, or the like, for example. One type of the above may be used, or two or more types of the above may be mixed and used.

The hydrolysis and the dehydration condensation of a silane coupling agent due to an acid generated from the acid generator or the acid catalytic reaction of an epoxy group as described above is facilitated by heat. Accordingly, as described below, a heater apparatus used for heating a coated optical fiber or an optical fiber core after the resin curing is performed is installed in the post-stage of an ultraviolet irradiation apparatus, and heat aging can be performed by using the heater apparatus. Further, heat aging can be performed by placing the manufactured optical fiber core in a thermostatic incubator. In such a way, it is possible to accelerate the improvement of adhesiveness between the coating layer 14 and the glass optical fiber 11.

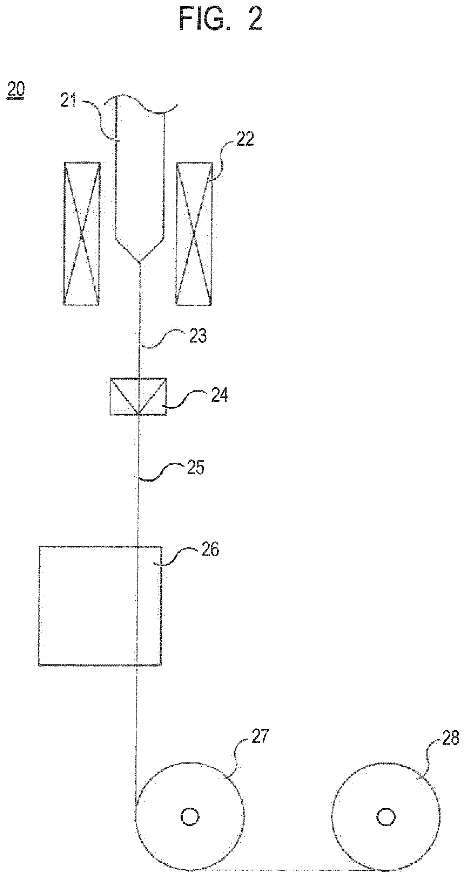

FIG. 2 is a schematic diagram of a manufacturing apparatus 20 used for a manufacturing method of the coated optical fiber 10 according to the present embodiment. For example, an optical fiber base material 21 is made of a quartz glass and is manufactured by a known method such as a VAD method, an OVD method, a MCVD method, or the like. The end of the optical fiber base material 21 is heated and melted by using a heater 22 that is a heater apparatus arranged around the optical fiber base material 21, and a glass optical fiber 23 (that is the glass optical fiber 11 in FIG. 1) is drawn by drawing.

A resin application apparatus 24 (dies) that applies an ultraviolet curable resin on the outer circumference of the glass optical fiber 23 is provided under the heater 22. The resin application apparatus 24 separately holds a coating material used for the primary layer 12 (referred to as a primary layer material) and a coating material used for the secondary layer 13 (referred to as a secondary layer material). Here, at least the primary layer material is a coating material used for an optical fiber according to the present embodiment containing the silane coupling agent, at least one of the photoacid generator and the thermal acid generator, and the epoxy compound described above. The secondary layer material is not limited to the configuration described above and may not contain a silane coupling agent, a photoacid generator, a thermal acid generator, and an epoxy compound, for example. The primary layer material and the secondary layer material are collectively applied to the glass optical fiber 23 drawn from the optical fiber base material 21 by the resin application apparatus 24.

An ultraviolet irradiation apparatus 26 that irradiates the glass optical fiber 25 coated with the primary layer material and the secondary layer material with an ultraviolet light is provided under the resin application apparatus 24. The ultraviolet irradiation apparatus 26 has any ultraviolet source such as a semiconductor light emitting device, a mercury lamp, or the like. The glass optical fiber 25 to which the ultraviolet curable resin is applied by the resin application apparatus 24 enters the ultraviolet irradiation apparatus 26 and is irradiated with the ultraviolet light. As a result, two layers of ultraviolet curable resins coated on the outer circumference of the glass optical fiber 25 are cured, and the two layers of ultraviolet curable resins become the primary layer 12 and the secondary layer 13.

In the present embodiment, a coating material used for the coating layer 14 (in particular, the primary layer 12) contains at least one of the photoacid generator and the thermal acid generator. When the coating material contains a photoacid generator, an acid is generated from the photoacid generator contained in the coating material by ultraviolet irradiation by the ultraviolet irradiation apparatus 26. When the coating material contains a thermal acid generator, an acid is generated from the thermal acid generator contained in the coating material due to heat from the light source included in the ultraviolet irradiation apparatus 26 or the reaction heat of the resin itself. When a higher temperature is required in accordance with the type of thermal acid generator, a heat source such as a heater may be provided in the ultraviolet irradiation apparatus 26, and heating may be performed simultaneously with ultraviolet irradiation.

The glass optical fiber (that is, the coated optical fiber 10) having the outer circumference on which the primary layer 12 and the secondary layer 13 are formed is guided by a guide roller 27 and wound by a winding apparatus 28.

In the manufacturing method of the coated optical fiber 10 according to the present embodiment, while the Wet-On-Wet method in which the primary layer 12 and the secondary layer 13 are applied by one die and cured is used, the Wet-On-Dry method in which the primary layer 12 and the secondary layer 13 are applied by separate dies and cured may be used.

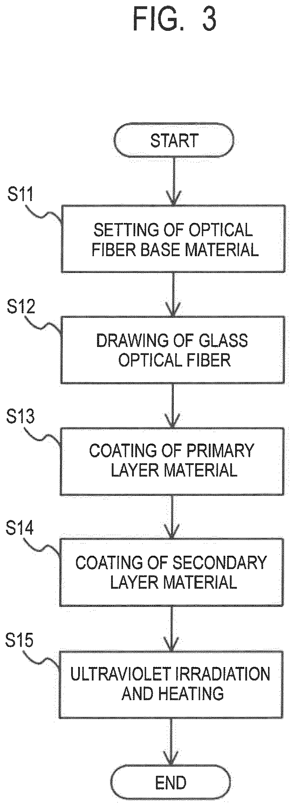

FIG. 3 is a diagram illustrating a flowchart of a manufacturing method of the coated optical fiber 10 according to the present embodiment. First, the user sets the optical fiber base material 21 in the manufacturing apparatus 20 (step S11). Next, the heater 22 heats the optical fiber base material 21, and drawing of the glass optical fiber 23 is started (step S12).

The resin application apparatus 24 coats the drawn glass optical fiber 23 with the primary layer material (step S13) and then coats the drawn glass optical fiber 23 with the secondary layer material (step S14). The ultraviolet irradiation apparatus 26 irradiates the glass optical fiber 25 coated with the primary layer material and the secondary layer material with an ultraviolet light and simultaneously performs heating (step S15). The primary layer material and the secondary layer material are cured by ultraviolet irradiation, and the coated optical fiber 10 having the primary layer 12 and the secondary layer 13 is formed.

An acid is generated from the photoacid generator contained in the coating material by ultraviolet irradiation by using the ultraviolet irradiation apparatus 26, and an acid is generated from the thermal acid generator contained in the coating material by heat from the light source included in the ultraviolet irradiation apparatus 26 or the reaction heat of the resin itself. That is, in the present embodiment, a step of curing the ultraviolet curable resin by ultraviolet irradiation by using the ultraviolet irradiation apparatus 26 also functions as a step of generating an acid from the photoacid generator and generating an acid from the thermal acid generator. Therefore, by the acid generated from the photoacid generator or the thermal acid generator, the hydrolysis and the dehydration condensation of the silane coupling agent are facilitated, and a ring cleavage reaction of an epoxy group of an epoxy compound proceeds. As described above, in the present embodiment, a heating step is included in an ultraviolet irradiation step.

The coating material used for the coating layer 14 (in particular, the primary layer 12) of the coated optical fiber 10 according to the present embodiment contains at least one of the photoacid generator and the thermal acid generator. When the coating material contains a photoacid generator, since the photoacid generator generates an acid only after ultraviolet irradiation, an acid is generated simultaneously with the ultraviolet curing of the coating material. When the coating material contains a thermal acid generator, since the thermal acid generator generates an acid only after heating, an acid is generated by reaction heat at the ultraviolet curing of the coating material or heating after the ultraviolet irradiation. The generated acid facilitates the progress of a hydrolysis reaction and a dehydration condensation reaction of the silane coupling agent. In addition, the generated acid serves as a catalyst, a hydroxyl group is produced by a ring cleavage reaction of an epoxy group of an epoxy compound, and the produced hydroxyl group interacts with the surface of the glass optical fiber 11. According to the results above, high adhesiveness between the glass optical fiber 11 and the coating layer 14 is obtained.

Further, the photoacid generator generates an acid by absorbing ultraviolet light emitted from the ultraviolet irradiation apparatus 26 to cure the ultraviolet curable resin and being decomposed. Therefore, when the coating material contains a photoacid generator, it is not necessary to add or change a manufacturing process. Further, the thermal acid generator may be decomposed by heat from the light source included in the ultraviolet irradiation apparatus 26 or the reaction heat of the resin itself and generate an acid. Therefore, even when the coating material contains a thermal acid generator, it is not necessarily to need to add or change a manufacturing process.

It has been often reported that optical loss is increased by water infiltration in a conventional optical fiber core. When water infiltrates an optical fiber core for a long period of time, interface adhesion between the glass optical fiber and the primary layer is reduced by the water infiltration causing a partial peeling, water is accumulated in a space formed accordingly, and the peeling is further extended, for example. When a peeling occurs at the interface between the glass optical fiber and the primary layer, and water is accumulated, which provides a side pressure to the glass optical fiber, and causes occurrence of an increase in optical loss due to a micro bending. Since the adhesiveness at the interface between the glass optical fiber and the primary layer is improved in the optical fiber core using the coated optical fiber 10 according to the present embodiment, an increase of optical loss due to water infiltration in the optical fiber core can be suppressed.

Further, since the adhesiveness at the interface between the glass optical fiber and the primary layer is improved in the coated optical fiber 10 according to the present embodiment, endurance (represented by dynamic fatigue characteristics) of breaking strength of the glass optical fiber 11 can be stably maintained over a long period of time.

In a configuration in which an acid or basic coating material is prepared in advance to facilitate the reaction of the silane coupling agent, there is a problem of natural progress of a reaction of a silane coupling agent during storage. In contrast, the coating material according to the present embodiment generates substantially no acid from the photoacid generator when stored in a dark place. Further, the coating material according to the present embodiment generates substantially no acid from the thermal acid generator when stored in a cool dark place. Therefore, the coating material according to the present embodiment has good storage stability.

### [Second Embodiment]

While the ultraviolet irradiation step and the heating step are performed in a single step in the first embodiment, a heating step separated from an ultraviolet irradiation step is performed in the present embodiment. The heating step decomposes the thermal acid generator to generate an acid. The heating step is performed at any timing before, on, or after the coating step of applying the ultraviolet resin to the glass optical fiber to the ultraviolet irradiation step for the curing as long as it can heat the coating material. For example, the coating step, the heating step, and the ultraviolet irradiation step may be performed in this order, and the order may be changed. Further, all or some of the coating step, the heating step, and the ultraviolet irradiation step may be repeated. Further, the coating step and the heating step may be simultaneously performed, or the heating step and the ultraviolet irradiation step may be simultaneously performed.

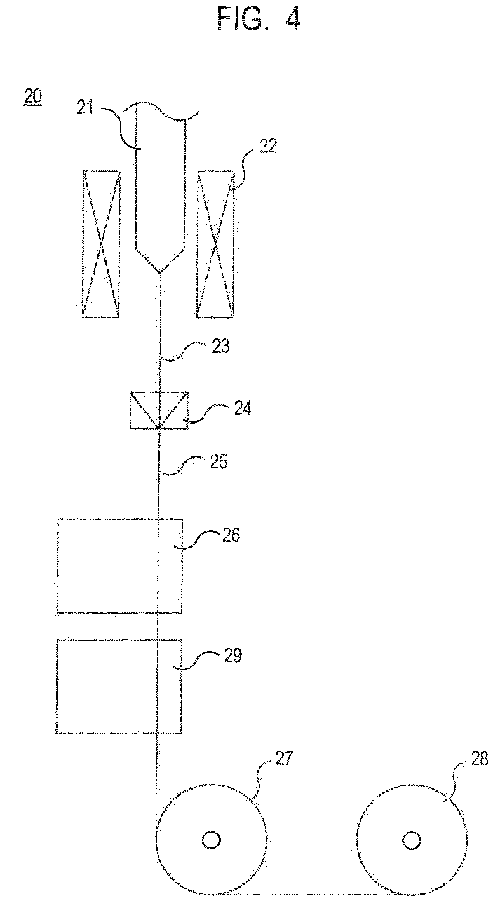

FIG. 4 to FIG. 6 are schematic diagrams of the manufacturing apparatus 20 used for the manufacturing method of the coated optical fiber 10 according to the present embodiment. In the manufacturing apparatuses 20 of FIG. 4 to FIG. 6, a heater apparatus 29 used for heating the coating material at a location is different from each other.

In the manufacturing apparatus 20 of FIG. 4, in addition to the configuration of the first embodiment, the heater apparatus 29 having a cylindrical shape is provided under the ultraviolet irradiation apparatus 26. The heater apparatus 29 performs heating when the glass optical fiber 25 that has been irradiated with the ultraviolet light by the ultraviolet irradiation apparatus 26 passes inside.

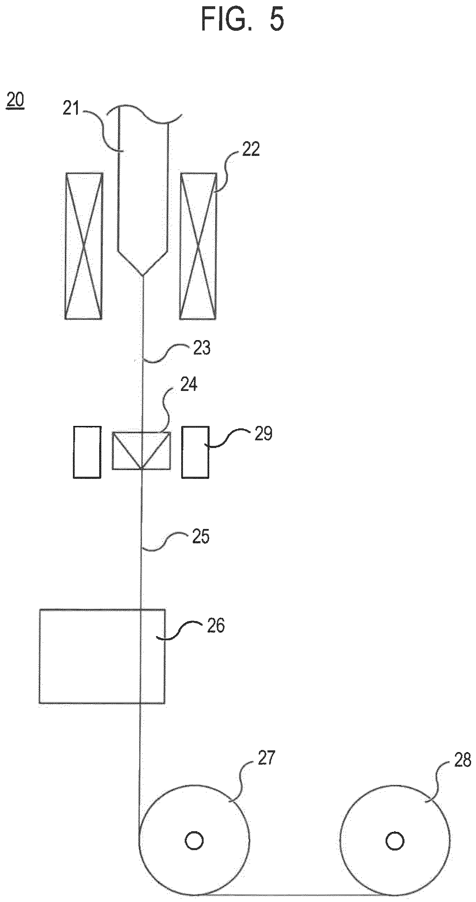

In the manufacturing apparatus 20 of FIG. 5, in addition to the configuration of the first embodiment, the heater apparatus 29 is provided so as to surround the sides of the resin application apparatus 24. The heater apparatus 29 heats the coating material by heating a die of the resin application apparatus 24, and the resin application apparatus 24 coats the glass optical fiber 23 with the heated coating material.

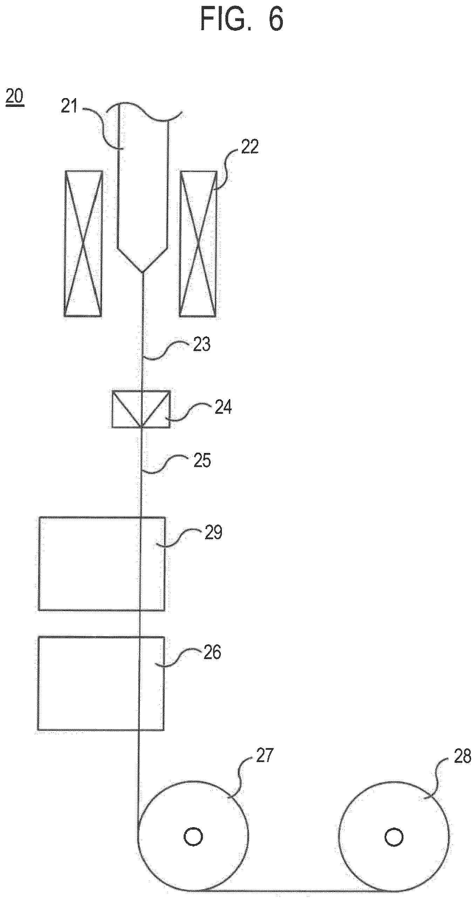

In the manufacturing apparatus 20 of FIG. 6, in addition to the configuration of the first embodiment, a heater apparatus 29 having a cylindrical shape is provided between the resin application apparatus 24 and the ultraviolet irradiation apparatus 26. The heater apparatus 29 performs heating when the glass optical fiber 25 that has been coated with the coating material by the resin application apparatus 24 passes inside.

Each heater apparatus 29 of FIG. 4 to FIG. 6 has any heat source such as a tape heater, a ribbon heater, a rubber heater, an oven heater, a ceramic heater, an infrared irradiation unit, an ultraviolet irradiation unit, a heating wire heater, a carbon heater, a halogen heater, or the like. To suppress damage to the coated optical fiber 10, the heating temperature by the heater apparatus 29 is preferably higher than or equal to 60 degrees Celsius and lower than or equal to 200 degrees Celsius, particularly preferably higher than or equal to 80 degrees Celsius and lower than or equal to 150 degrees Celsius.

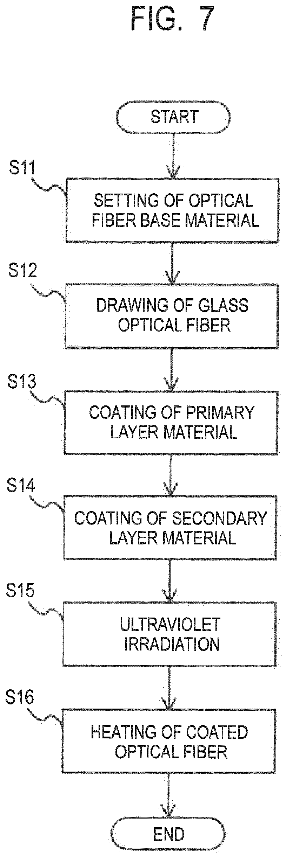

FIG. 7 is a diagram illustrating a flowchart of the manufacturing method of the coated optical fiber 10 using the manufacturing apparatus 20 of FIG. 4. The steps S11 to S15 are the same as those of the first embodiment. After the ultraviolet irradiation in step S15, the heater apparatus 29 heats the coated optical fiber 10 (that is, the coating material of the coating layer 14) at a predetermined temperature (step S16).

When the manufacturing apparatus 20 of FIG. 5 is used, the heating step (step S16) and the coating steps (steps S13 to S14) are performed at the same time in the flowchart in FIG. 7. Further, when the manufacturing apparatus 20 in FIG. 6 is used, in the flowchart of FIG. 7, the heating step (step S16) is performed between the coating steps (steps S13 to S14) and the ultraviolet irradiation step (step S15). In the present embodiment, while each of the coating step, the ultraviolet irradiation step, and the heating step is performed once, at least one of these steps may be repeated twice or more.

According to the present embodiment, in a case where the coating material contains a thermal acid generator, even when a temperature in the ultraviolet irradiation step does not reach the decomposition temperature of the thermal acid generator, the coating material is heated up to the decomposition temperature of the thermal acid generator in the heating step to generate an acid. This facilitates a hydrolysis reaction and a dehydration condensation reaction of a silane coupling agent and causes a ring cleavage reaction of an epoxy group of an epoxy compound to progress. Further, the hydrolysis and the dehydration condensation of the silane coupling agent or acid catalytic reaction of the epoxy group by the acid generated from the photoacid generator or the thermal acid generator is facilitated by the heat in the heating step. As described above, according to the present embodiment, high adhesiveness between the glass optical fiber 11 and the coating layer 14 can be obtained.

Further, the heating step may be performed after the coated optical fiber 10 is manufactured. Specifically, after the coated optical fiber 10 is manufactured by the manufacturing method according to the first embodiment, the coated optical fiber 10 may be heated by being placed in a thermostatic incubator set to a predetermined temperature. In such a way, an advantage of improving interface adhesion by heating can be obtained without a change in the manufacturing apparatus 20 from the first embodiment.

### [Examples]

### 1. Coating Material Formulation

As an ultraviolet curable resin used for the coating material, an ultraviolet curable polyether-based urethane acrylate-based resin was used. The Young's modulus is adjusted to be 1.0 MPa by changing the molecular weight of the polyether moiety in the oligomer, or the type and the formation amount of diluent monomers and reactive monomers. As a photopolymerization initiator, 3.0 wt% of Lucirin (registered trademark) TPO (manufactured by BASF, product name) are used, and as a silane coupling agent, 1.5 wt% of KBM-5103 (manufactured by Shin-Etsu Chemical Co., Ltd., product name) was used.

As a photoacid generator to be added to the coating material, 4-isobutyl phenyl(4-methylphenyl)iodonium hexafluorophosphate (manufactured by BASF, product name IRGACURE 250) was used. Further, as a thermal acid generator to be added to the coating material, 1-naphthyl methyl methyl-p-hydroxyphenylsulfonium hexafluoroantimonate (manufactured by Sanshin Chemical Industry Co., Ltd., product name San-Aid SI-60L, decomposition temperature is 60 degrees Celsius) was used. The addition amount of IRGACURE 250 was 0.3 wt% when used alone, and the addition amount of IRGACURE 250 was 0.2 wt% when used in combination with SI-60L. On the other hand, the addition amount of SI-60L was 0.3 wt% when used alone, and the addition amount of SI-60L was 0.1 wt% when used in combination with IRGACURE 250.

As an epoxy compound to be added to the coating material, glycidyl methacrylate (manufactured by Tokyo Chemical Industry Co., Ltd.) was used.

In each Example and Comparative Example, various types and amounts of the acid generators added to the coating material were set as illustrated in Table 1 below. Further, the amount of the epoxy compound added to the coating material was set such that the concentration of an epoxy group had the value illustrated in Table 1.

### 2. Film Fabrication

The coating material according to each Example and Comparative Example was spin-coated by a thickness of 100 µm on a plate-shaped glass substrate. The fabricated sample was put in a purge box to be provided with a nitrogen atmosphere and was irradiated with ultraviolet light with the illuminance and the rate being adjusted so that the integrated light quantity was 500 mJ/cm² (measurement wavelength of 365 nm, electrodeless UV lamp, D bulb) by a conveyer type ultraviolet irradiation apparatus. The coating material cured in such a way was used as the film according to each Example and Comparative Example.

### 3. Young's Modulus Measurement

The Young's modulus (tensile resilient modulus) of the film was used to determine the curability of the coating material. Each film according to Examples and Comparative Examples was peeled off from the glass substrate and cut into a strip of a width of 6 mm, and the 2.5%-modulus thereof was measured conforming to JIS K7161.

### 4. Glass Adhesion Measurement

To determine interface adhesion between the coating material and the glass substrate, glass adhesion was used. The film according to each Example and Comparative Example was cut into a width of 10 mm, and force needed when the film was peeled from the glass surface by pulling the film in a direction of 90 degrees from the surface of the glass substrate at a rate of 50 mm/min at the room temperature was measured as the glass adhesion. The measurement was performed under three conditions of 1 day, 3 days, and 14 days after film fabrication.

The conditions and the measurement results of respective Examples and Comparative Examples are indicated in Table 1.

**[Table 1]**

| No. | IRGACURE 250 (wt%) | SI-60 L (wt%) | Concentration of Epoxy Group (mmol/g) | Young's Modulus (MPa) | Glass Adhesion (N/m) | | |
|---|---|---|---|---|---|---|---|
| | | | | | 1 Day | 3 Days | 14 Days |
| Example 1 | 0.3 | 0 | 0.1 | 1.1 | 2.1 | 2.5 | 2.8 |
| Example 2 | 0.3 | 0 | 0.3 | 1.0 | 2.0 | 3.1 | 4.1 |
| Example 3 | 0.3 | 0 | 0.7 | 1.0 | 2.2 | 3.5 | 4.7 |
| Example 4 | 0.3 | 0 | 1.4 | 1.0 | 2.2 | 3.5 | 4.5 |
| Example 5 | 0.3 | 0 | 2.3 | 0.9 | 2.3 | 3.6 | 4.3 |
| Example 6 | 0.3 | 0 | 4.7 | 0.9 | 2.1 | 3.5 | 4.4 |
| Example 7 | 0 | 0.3 | 0.7 | 1.1 | 2.0 | 3.2 | 4.3 |
| Example 8 | 0 | 0.3 | 1.4 | 1.1 | 1.9 | 3.2 | 4.1 |
| Example 9 | 0.2 | 0.1 | 1.4 | 1.0 | 2.3 | 3.6 | 4.4 |
| Comparative Example 1 | 0 | 0 | 0 | 1.0 | 1.3 | 1.5 | 2.0 |
| Comparative Example 2 | 0.3 | 0 | 0 | 1.0 | 2.0 | 2.3 | 2.7 |
| Comparative Example 3 | 0 | 0 | 0.7 | 0.9 | 1.3 | 1.2 | 2.0 |

In Examples 1 to 6, compared to Comparative Example 1 in which neither the photoacid generator nor the epoxy compound is added and Comparative Examples 2 and 3 in which either one is not added, it was confirmed that the glass adhesion is improved by using the photoacid generator and the epoxy compound in combination. Further, in Examples 1 to 6, it was also confirmed that the glass adhesion tends to increase as the addition amount of the epoxy compound increases.

Further, in Examples 7 and 8, it was confirmed that even when the thermal acid generator is added instead of the photoacid generator, the same advantageous effect as when the photoacid generator is added is obtained. In such a case, the thermal acid generator generated an acid by using the heat of the reaction of the resin at the ultraviolet irradiation and the heat from the irradiation apparatus.

Further, in Example 9, it was confirmed that even when the photoacid generator and the thermal acid generator are used in combination, the same advantageous effect as when one of them is added can be obtained.

On the other hand, in Comparative Example 1, it was confirmed that, when neither the acid generator nor the epoxy compound is added, while a certain degree of glass adhesion is developed by the action of the silane coupling agent, it takes time before the development thereof.

Further, in Comparative Example 2, it was confirmed that, although the addition of the photoacid generator accelerates the development of the glass adhesion and improves the glass adhesion compared to Comparative Example 1, the glass adhesion is smaller than that of each Example in which the epoxy compound is also added.

Further, in Comparative Example 3, it was confirmed that the glass adhesion is not developed when only the epoxy compound is added. This is because there is no catalyst such as an acid, and the reaction of the epoxy group is less likely to occur.

The present invention is not limited to the embodiments described above and can be properly changed within the scope not departing from the spirit of the present invention.

### List of Reference Numerals

- 10:: coated optical fiber
- 11:: glass optical fiber
- 12:: primary layer
- 13:: secondary layer
- 14:: coating layer

## Claims

1. A coating material for an optical fiber comprising:
an ultraviolet curable resin;
a silane coupling agent;
at least one of a photoacid generator that generates an acid by light irradiation and a thermal acid generator that generates an acid by heat; and
a compound including an epoxy group.

2. The coating material for an optical fiber according to claim 1, wherein an amount of the photoacid generator is larger than or equal to 0.01 wt% and smaller than or equal to 10 wt% with respect to the coating material for an optical fiber.

3. The coating material for an optical fiber according to claim 1, wherein an amount of the thermal acid generator is larger than or equal to 0.01 wt% and smaller than or equal to 10 wt% with respect to the coating material for an optical fiber.

4. The coating material for an optical fiber according to any one of claims 1 to 3, wherein an amount of the compound including the epoxy group is an amount such that a concentration of an epoxy group is larger than or equal to 0. 1 mmol/g and smaller than or equal to 5.0 mmol/g with respect to the coating material for an optical fiber.

5. The coating material for an optical fiber according to any one of claims 1 to 4 further comprising a photopolymerization initiator that initiates a polymerization of the ultraviolet curable resin,
wherein an amount of the photoacid generator and the thermal acid generator included in the coating material for an optical fiber is smaller than or equal to an amount of the photopolymerization initiator.

6. The coating material for an optical fiber according to any one of claims 1 to 5, wherein a wavelength region of a light used for curing the ultraviolet curable resin and a wavelength region of a light used for causing the photoacid generator to generate the acid at least partially overlap each other.

7. The coating material for an optical fiber according to any one of claims 1 to 6, wherein the photoacid generator includes at least one of an onium salt-based photoacid generator and a nonionic photoacid generator.

8. The coating material for an optical fiber according to any one of claims 1 to 7 further comprising a photosensitizer that absorbs a light in a wavelength region different from that of the photoacid generator.

9. The coating material for an optical fiber according to any one of claims 1 to 8, wherein a temperature at which the thermal acid generator generates the acid is higher than or equal to 60 degrees Celsius and lower than or equal to 200 degrees Celsius.

10. The coating material for an optical fiber according to any one of claims 1 to 9, wherein the thermal acid generator includes an onium salt-based thermal acid generator.

11. The coating material for an optical fiber according to any one of claims 1 to 10 further comprising both the photoacid generator and the thermal acid generator.

12. A coated optical fiber comprising:
a glass optical fiber; and
a coating layer that coats the glass optical fiber, and
wherein at least one layer forming the coating layer is formed of the coating material for an optical fiber according to any one of claims 1 to 11.

13. A manufacturing method of a coated optical fiber comprising steps of:
drawing a glass optical fiber;
coating the glass optical fiber with a coating material including an ultraviolet curable resin, a silane coupling agent, at least one of a photoacid generator generating an acid by light irradiation and a thermal acid generator generating an acid by heat, and a compound having an epoxy group;
curing the ultraviolet curable resin by irradiating the glass optical fiber coated with the coating material with an ultraviolet light; and
causing at least one of the photoacid generator and the thermal acid generator to generate the acid.

14. The manufacturing method of a coated optical fiber according to claim 13 further comprising a step of heating the coating material.
